(19) Europäisches Patentamt
European Patent Office
Office européen des brevets

(11) Numéro de publication : **0 120 765**
**B1**

(12) **FASCICULE DE BREVET EUROPÉEN**

(45) Date de publication du fascicule du brevet : **04.05.88**

(51) Int. Cl.[4] : **C 23 G 5/06**, C 23 C 22/00

(21) Numéro de dépôt : **84400534.8**

(22) Date de dépôt : **15.03.84**

(54) **Composition acide à base de microémulsion, et ses applications, notamment pour des nettoyages.**

(30) Priorité : **24.03.83 FR 8304824**

(43) Date de publication de la demande : **03.10.84 Bulletin 84/40**

(45) Mention de la délivrance du brevet : **04.05.88 Bulletin 88/18**

(84) Etats contractants désignés : **DE GB IT NL SE**

(56) Documents cités :
**EP-A- 0 034 842**
**FR-A- 2 014 018**
**FR-A- 2 087 740**
**FR-A- 2 122 569**
**FR-A- 2 297 668**

(73) Titulaire : **SOCIETE NATIONALE ELF AQUITAINE**
**Tour Aquitaine**
**F-92400 Courbevoie (FR)**

(72) Inventeur : **Gautier, Jean-Claude**
**5 Avenue Jean-Jaurès**
**F-64140 Billere (FR)**
Inventeur : **Komornicki, Jacques**
**12 Lottissement Curt**
**F-64230 Lescar (FR)**

(74) Mandataire : **Kohn, Armand**
**5 Avenue Foch**
**F-92380 Garches (FR)**

**EP 0 120 765 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention se rapporte à une nouvelle composition, de caractère acide, qui est une microémulsion renfermant un liquide organique, hydrophobe, et une solution aqueuse d'un acide. Elle concerne également les applications de cette composition et, en particulier, nettoyage, décapage ou/et dégraissage de différentes surfaces. Parmi ces applications, le traitement anticorrosion de surfaces de métaux ferreux occupe une place importante.

On a déjà cherché précédemment à préparer et utiliser des microémulsions acides, utiles pour certaines applications. Il en est question dans les brevets US 3 754 599 et 3 831 679 qui décrivent la préparation de dispersions micellaires de quelques acides minéraux dans des hydrocarbures. Cette technique antérieure est basée sur l'emploi d'agents tensioactifs anioniques, notamment du type sulfonate. L'expérience a montré que ces dispersions laissaient beaucoup à désirer du fait, semble-t-il, de la réaction de l'acide avec le sel de métal alcalin formant l'agent tensioactif, et à cause de la précipitation de solides qui s'y produit. Un progrès marqué, dans ce domaine, fut accompli par l'application d'agents tensioactifs à fonction ammonium quaternaire, c'est-à-dire d'agents cationiques, comme décrit dans la publication de demande de brevet français N° 2 480 620. On peut ainsi obtenir différents types de microémulsions de bonne stabilité, convenant à divers usages, tels qu'extractions liquide-liquide de cations métalliques, catalyse de réactions d'alkylation, d'hydrolyse, d'estérification, de polymérisation, d'isomérisation et autres, exigeant un milieu acide. Les microémulsions de ce genre, comprenant un hydrocarbure et une solution aqueuse d'un acide, conviennent également à la stimulation des puits de pétrole, à des nettoyages et des décapages de différentes surfaces. Etant donné cependant que les tensioactifs d'ammonium quaternaire doivent, dans certains cas, être employés à des doses relativement fortes, de plus de 15 %, et que leur prix n'est pas négligeable, la question se posait si — malgré leurs avantages — ils ne pourraient pas être remplacés par d'autres. En outre, les tensioactifs ammonium quaternaires commerciaux sont généralement halogénés, ce qui peut être défavorable du point de vue de la corrosion dans le cas de traitement de métaux. On a donc été amené à rechercher des compositions de microémulsion, qui présenteraient les avantages de celles de FR-A- 2 480 620 tout en étant plus économique et, au besoin, exemptes d'halogènes.

FR-A 2 122 569 décrit des émulsions de 5 à 70 % d'eau dans des solvants constitués d'hydrocarbures halogénés, à l'aide de 0,5 à 10 % d'agent tensioactif. Ces émulsions ne contiennent pas de co-tensioactif. Il ne peut donc être question de microémulsions. Les exemples indiquent 1 % seulement de tensioactif et la nécessité de dégraisser les objets avant l'emploi de ces émulsions. D'autres substances, en quantités limitées, peuvent y être incorporées, parmi lesquelles des acides phosphorique, chlorhydrique, citrique ou tartrique. Cependant, ces substances sont décrites comme accélérateurs de la séparation des phases de l'émulsion.

FR-A- 2 087 740 propose une composition de nettoyage comprenant de l'eau en émulsion dans du trichloréthylène, avec comme agents tensioactifs un ester phosphorique et un sel acide dérivé des anhydrides ou acides alcénylsucciniques. Mais contrairement à l'objet de la présente invention, ce document recommande d'ajuster le pH à 6,5-7 du fait que l'acidité serait préjudiciable au nettoyage visé des alliages de l'aluminium.

La présente invention a pour but de pallier les inconvénients ci-dessus exposés. Elle permet de réaliser toutes les applications notées plus haut, de façon économique, avec — de plus — l'avantage considérable de rendre possible le décapage ou/et la passivation d'une surface métallique grasse en une seule opération, sans dégraissage préalable. Contrairement à la technique connue qui exige d'abord le dégraissage de la surface à l'aide de détergents ou/et solvants organiques suivi d'un rinçage, avant le traitement par une solution aqueuse, acide, la nouvelle composition, suivant l'invention, permet d'obtenir en même temps l'enlèvement de la pellicule grasse, recouvrant la surface, et le décapage ou/et la passivation de cette surface. Cette possibilité présente un grand intérêt, en particulier dans la préparation de tôles métalliques avant peinture.

La nouvelle composition, suivant l'invention, est une microémulsion comprenant un hydrocarbure halogéné ou non halogéné, une solution aqueuse d'un acide, un agent tensioactif constitué par un ou plusieurs esters phosphoriques, accompagné d'un agent co-tensioactif, ladite composition définie par les proportions de ses éléments, exprimées en poids, étant choisie parmi :

| | |
|---|---|
| (a) hydrocarbure | 35 à 65 % |
| solution aqueuse acide | 20 à 45 % |
| agent tensioactif | 4 à 13 % |
| agent co-tensioactif | 4 à 16 % |
| et (b) hydrocarbure | 30 à 47 % |
| solution aqueuse acide | 18 à 35 % |
| agent tensioactif | 13 à 28 % |
| agent co-tensioactif | 5 à 23 % |

le rapport pondéral solution aqueuse acide/hydrocarbure étant de 0,5 à 1.

Suivant une forme particulière de réalisation de l'invention, la phase aqueuse acide de la composition définie sous (a) renferme 20 à 85 % en poids d'acide phosphorique.

Une telle composition convient spécialement bien au dégraissage et à la phosphatation, en une seule opération, de surfaces de métaux ferreux.

Suivant une autre forme particulière de l'invention, la phase aqueuse acide de la composition définie sous (b) ci-dessus, renferme de l'acide chlorhydrique. Une telle composition convient spécialement bien au dégraissage et au décapage simultanés, notamment de surfaces métalliques.

Le ou les esters phosphoriques, utilisables selon l'invention, sont des composés résultant de l'estérification de l'une, de deux ou des trois fonctions acides du $PO_4H_3$ par un hydroxyle terminal d'une chaîne polyalkoxy qui peut porter à son autre bout un alkyle, un alkényle ou un aryle.

Le monoester peut être représenté par la formule générale

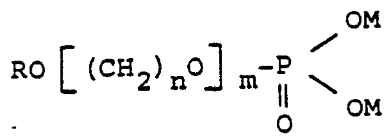

(1)

où R est un alkyle ou alkényle, en général en $C_1$ à $C_{30}$ et le plus souvent en $C_6$ à $C_{18}$, ou bien un phényle éventuellement porteur de substituants alkyliques ; n est un nombre entier de 1 à 6 et de préférence de 2 à 4, tandis que m est un nombre entier de 2 à 15 et de préférence entre 3 et 10. Les M désignent des cations, qui sont en général H, Na, K ou $NH^4$, mais peuvent également être des alcalino-terreux, Zn ou autres.

Dans le diester, un des M de la formule (1) est constitué par une seconde chaîne alkoxylique RO $[(CH_2)_n\ O]_m$ - dont les symboles R, n et m ont les significations données ci-dessus. Cependant, la première chaîne alkoxylique de diester n'est pas obligatoirement identique à la deuxième chaîne.

Le triester porte trois chaînes oxyaliphatiques, RO $[(CH_2)_n\ O]_m$ - et, par conséquent, n'a plus de M, les symboles R, n et m étant définis comme indiqué ci-dessus.

Bien que les différents esters phosphoriques, tensioactifs, définis ci-dessus, puissent être utilisés individuellement, dans la pratique on se sert en général de mélanges de monodi- et tri-esters, surtout des deux premiers de quelques polyalkoxy-alkyles ayant des R différents, provenant de la fabrication industrielle à partir d'acides gras globaux d'huiles ou graisses telles que par exemple coprah, suif, colza, etc. Ainsi, par exemple, lorsque R provient des acides gras du coprah (huile de coco), on peut avoir un mélange d'esters, dans lequel 3 % environ ont un R en $C_8$ ; 6 % en $C_{10}$, 56 % en $C_{12}$, 18 % en $C_{14}$, 10 % en $C_{16}$, 2 % en $C_{18}$ (stéaryle) et 5 % en $C_{18}$ (oléyle).

Lorsque R est un phényle, il est bon qu'il porte des substituants linéaires allongeant la chaîne polyalkoxylique. Ainsi l'ester peut avoir avantageusement la structure

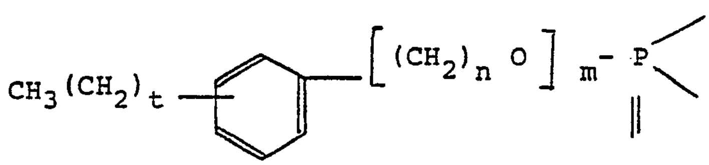

t étant de préférence un nombre entier de 1 à 8.

Dans les compositions suivant l'invention, définies sous le paragraphe (a) plus haut, il suffit de 4 à 13 %, et surtout de 5 à 12 % en poids d'ester tensioactif phosphorique, pour créer une microémulsion d'acide aqueux dans le liquide hydrophobe. En faisant varier les proportions et la nature des matières en présence on peut cependant former un quelconque des autres types de microémulsion (huile dans eau ou bicontinue).

En ce qui concerne les autres constituants de la composition suivant l'invention, ils peuvent être choisis parmi ceux que la technique antérieure utilise à la préparation de microémulsions. C'est notamment le cas des agents cotensioactifs qui doivent accompagner le tensioactif lui-même : ces adjuvants peuvent être des alcools, cétones, éthers, diols, et leurs dérivés éthers de glycol ester, éther de glycol tel l'acétate de butyl éther de glycol, esters d'acides organiques, glycéryl éther sulfonates, amides, mono- et diesters de l'acide phosphorique, sulfoxydes, sels d'amines ou de bases organiques quaternaires, etc.

Comme dans l'art antérieur, les mono- et di-alcools en $C_4$ à $C_{12}$ se révèlent à la fois économiques et techniquement avantageux.

Les nouvelles compositions suivant l'invention, renfermant des liquides hydrophobes très divers : hydrocarbures, hydrocarbures halogénés, huiles végétales, etc. Les hydrocarbures comprennent tant les paraffines, oléfines, naphtènes, aryles et différentes fractions des pétroles bruts, que des huiles polynucléaires, telles qu'huiles anthracéniques et autres. Il convient bien aux solvants chlorés, courants, en $C_1$ à $C_4$ ce qui est fort pratique par comparaison avec les autres procédés de microémulsion à milieu acide. Cela permet d'utiliser les compositions, avec d'excellents résultats, aux opérations de dégraissage, simultanément avec un décapage et la phosphatation de pièces en métaux ferreux, chose fort difficile ou

impossible avec les compositions de l'art antérieur.

En dehors des acides à activité chimique, oxydante ou autre, marquée, comme par exemple les acides chlorique, bromique, nitrique concentré, nitreux, chromique ou trichloroacétique, tous les autres, inertes vis-à-vis des constituants de la composition, peuvent être employés. Peuvent être, notamment, utilisés les acides chlorhydrique, bromhydrique, fluorhydrique, perchlorique, sulfurique, sulfureux, phosphorique, borique, $H_3PO_4$-$BF_3$, $BF_3$-HF, $NH_4F$-HF etc. ainsi qu'un grand nombre d'acides organiques, comme acétique, propionique, alkyl- et aryl- sulfoniques, butyrique, oxalique, acides phosphoniques et bien d'autres.

Des applications de l'acide phosphorique sont particulièrement intéressantes dans le cadre de cette invention. Elles conduisent à ce résultat inattendu, mentionné plus haut, qu'il devient possible de traiter, en une opération unique, des pièces en fer ou en acier, pour les dégraisser et phosphater en vue de la peinture subséquente.

Dans les exemples non limitatifs, qui suivent, on a désigné par les initiales EPT les agents tensioactifs constitués par des esters décrits plus haut et illustrés par la formule (1). Les trois produits EPT-1, -2 et -3 présentent respectivement les compositions suivantes.

EPT-1 : mélange sensiblement équimoléculaire de mono- et di-esters, dans lesquels R désigne les groupes aliphatiques des acides gras du coprah, c'est-à-dire avec prédominance de lauryle ($C_{12}$) et de myristyle ($C_{14}$), dont la répartition est d'ailleurs indiquée plus haut, dans la présente description ;

n est égal à 2 et la moyenne de m est 7 ;

M est Na.

EPT-2 : constitué par 1 mole de monoester

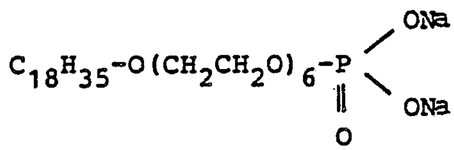

où $C_{18}H_{35}$- est l'oléyle, et 1 mole de diester correspondant dans lequel une seconde chaîne $C_{18}H_{35}$-$O(CH_2CH_2O)_6$- remplace un Na.

EPT-3 : comprend environ 25 % de monoester, 50 % de diester et 25 % de triester phosphoriques, la chaîne polyalkoxylique portant en R le reste de n nonylphénol :

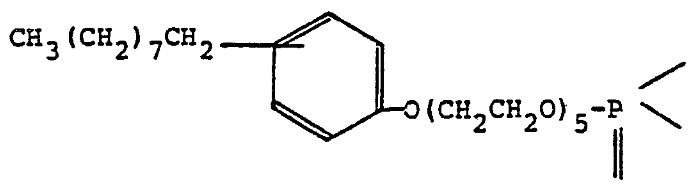

Exemples 1 et 2

Compositions convenant au traitement de tôles avant peinture ou au nettoyage des échangeurs de raffineries

La phase 35 aqueuse est formée par de l'acide orthophosphorique à 85 % en poids (exemple 1) ou dilué avec de l'eau jusqu'à la teneur de 21 % (exemple 2).

Le liquide hydrophobe est le trichloroéthane.

Les microémulsions obtenues, stables jusqu'à 80 °C, sont constituées comme suit.

| | % en poids : exemple 1 | exemple 2 |
|---|---|---|
| Phase aqueuse | | |
| acide phosphorique à 85% | 30,3 | 6,7 |
| eau | - | 20,2 |
| Phase hydrophobe : | | |
| trichloroéthane | 60,5 | 53,7 |
| Cotensioactif : | | |
| éthyl-2 hexanol | 4,6 | 9,7 |
| Tensioactif : | | |
| EPT-1 | 4,6 | 9,7 |

Des compositions aussi stables et efficaces ont été obtenues par le remplacement de l'éthyl-2 hexanol par du butyl éther de l'éthylène-glycol ou du décanol et pour des acidités différentes.

D'autre part, des microémulsions similaires ont été préparées avec, comme tensioactif de l'EPT-2 ou de l'EPT-3 à la place de l'EPT-1 ; la teneur maximale en EPT-2 était de 11,1 %. Mêmes résultats sont obtenus avec des proportions de matières intermédiaires entre celles des exemples 1 et 2.

Dans les compositions destinées à la phosphatation de tôles, simultanément avec le dégraissage, on employait une phase aqueuse renfermant au minimum 500 ppm de sel de Zn qui, comme on le sait, facilite la phosphatation.

Exemples 3 et 4

Compositions utiles au nettoyage de conduites et appareils de raffineries de pétrole.

C'est l'acide phosphorique à 85 % qui est employé, avec addition d'eau, le rapport phase aqueuse/phase hydrophobe étant 1.

| | % en poids : | |
|---|---|---|
| | exemple 3 | exemple 4 |
| Acide phosphorique à 85% | 32,15 | 9,50 |
| Eau | 9,55 | 29,05 |
| Perchloréthylène | 41,70 | 38,60 |
| Ethyl-2 hexanol | 4,17 | 10,10 |
| Décanol | 4,17 | - |
| Tensioactif : EPT-2 | 8,35 | - |
| EPT-3 | - | 12,60 |

Exemples 5 à 8

Composition pour décapage dégraissant avec de l'acide chlorhydrique.

La phase acide, aqueuse, est constituée par une solution de 28 % en poids HCl dans l'eau.

| | % en poids : | | | |
|---|---|---|---|---|
| exemples | 5 | 6 | 7 | 8 |
| Phase aqueuse acide | 18,2 | 30 | 31,6 | 34,9 |
| Gazole | 36,4 | - | - | - |
| Trichloroéthane | - | 30 | 42,1 | 46,5 |
| Ethyl-2 hexanol | 11,4 | 12 | 7,8 | - |
| Octanol | - | - | - | 5,6 |
| Décanol | 11,4 | - | - | - |
| Tensioactif EPT-2 | - | 28 | 9,0 | - |
| " EPT-3 | 22,7 | - | 9,5 | 13 |

Les microémulsions ainsi formées sont stables et donnent de bons résultats, mais exigent en général plus de tensioactif que les compositions phosphoriques des exemples précédents.

Exemples 9 à 11(basés sur l'état de la technique)

Dégraissage et phosphatation de tôles.

Trois séries d'échantillons de tôles de fer grasses, venant de l'usinage, sont traitées par trois compositions dont elles sont enduites avec un rouleau, en vue du dégraissage avec phosphatation simultanée de ces tôles. Toutes les heures on examine les échantillons au point de vue de leur degré de dégraissage.

Les compositions sont formées, en poids de :

21,5 % de solution aqueuse à 50 % de $PO_4H_3$ (à 1000 ppm de zinc)
43,0 % de white spirit
25,0 % de butyl éthylène glycol
11,5 % d'agent tensioactif.

Ces microémulsions diffèrent les unes des autres seulement par la nature du tensioactif, indiquée au tableau des résultats ci-après.

Voici les degrés de dégraissage observés.

| Exemples | 9 | 10 | 11 |
|---|---|---|---|
| Tensioactif : | lauryl-sulfate de sodium | chlorure de lauryle triméthyl ammonium | EPT-1 |
| Dégraissage : | | | |
| après 1 heure | très faible | faible | insuffisant |
| " 2 " | faible | " | bon |
| " 3 " | très partiel | insuffisant | complet |

Bien que la composition de l'exemple 11, comprenant un ester phosphorique en tant qu'agent tensioactif, soit la plus efficace, la vitesse de dégraissage des tôles est inférieure à celle que procurent les compositions revendiquées, comme on peut le constater dans les exemples 12-14 qui suivent.

Exemples 12-14

Dégraissage et phosphatation de tôles.

Des essais analogues à ceux des exemples 9-11 sont effectués avec du trichloroéthane à la place du white spirit.

En outre, après le traitement on rince les tôles à l'eau, on les sèche et les peint avec une résine glycérophtalique. A la manière connue dans l'art, on essaye ensuite l'adhérence de la pellicule de peinture, par la méthode de quadrillage à l'aide d'une lame, en des carrés de 1 mm de côté.

Le % de carrés ayant donné lieu à l'arrachement de la pellicule est indiqué au tableau des résultats ci-après :

Composition utilisée :

25,90 % de solution aqueuse à 65 % $PO_4H_3$ (à 1 000 ppm de zinc)
51,90 % de trichloroéthane
9,25 % de décanol
11,10 % d'agent tensioactif
1,85 % de monobutyl éther de l'éthylène glycol (ou butyl glycol)

| exemple n° | 12 | 13 | 14 |
|---|---|---|---|
| Tensioactif : | lauryl-sulfate de sodium | chlorure de lauryl triméthyl ammonium | EPT-1 |
| Dégraissage : | | | |
| après 1 heure | faible | faible | assez bon |
| " 2 " | " | insuffisant | complet |
| " 3 " | partiel | passable | - |
| " 4 " | passable | bon | |
| Adhérence | | | |
| % d'arrachement | 40 | 22 | 0 |

L'avantage du tensioactif à base d'ester phosphorique se confirme donc et, en outre, on constate que la combinaison spéciale, qui consiste à employer une microémulsion d'acide phosphorique dans un

solvant chloré, avec un tensioactif d'ester phosphorique, apporte des résultats surprenants, suivants.

Lors de l'application de la microémulsion sur la tôle, on constate un très bon mouillage, ce qui conduit à un traitement uniforme de la tôle ; le rinçage à l'eau, s'accompagnant de l'élimination d'une pellicule grasse, permet un contrôle visuel de l'opération et la détection éventuelle d'endroits non traités, qui constitueraient par la suite des sources de corrosion ; la plaque, ainsi traitée, peut rester à l'air libre plusieurs jours sans subir de corrosion.

D'autre part, comme le montre le tableau ci-dessus, le traitement des tôles par les microémulsions selon l'invention permet une excellente adhérence des peintures sur les plaques métalliques.

## Exemple 15

Nettoyage d'un échangeur de chaleur de raffinerie de pétrole.

La microémulsion chlorhydrique de l'exemple 8 permet de décrasser complètement les surfaces d'échange de cet appareil en 3 heures à 50 °C, alors qu'il faut une journée entière pour effectuer ce travail en dégraissant d'abord au solvant chloré et traitant ensuite avec la solution aqueuse de HCl.

Ce résultat est confirmé par des essais de laboratoire, où l'on enrobe un fragment de 2 g de craie de Champagne (87 % $CaCO_3$) préalablement enrobé de pétrole brut.

Plongé dans la composition de l'exemple 8, ce fragment donne lieu au dégagement de $CO_2$ dont les volumes totaux sont :

40 ml après 15 minutes
150 ml après 1 heure
205 ml après 2 heures
250 ml après 3 heures

sur le total de 390 ml que renferme le carbonate traité. On a donc attaqué 64 % de ce dernier.

Dans un essai parallèle, après lavage du fragment gras au trichloroéthane et immersion dans une solution de HCl à 28 %, aucun dégagement de gaz n'a eu lieu après 2 heures de contact.

## Revendications

1. Composition comprenant un hydrocarbure halogéné ou non halogéné, en microémulsion avec une solution aqueuse d'un acide au moyen d'un agent tensioactif constitué par un ou plusieurs esters phosphoriques accompagné d'un agent cotensioactif, composition dans laquelle les relations suivantes existent entre les proportions pondérales des composants de la microémulsion :

| | |
|---|---|
| hydrocarbure | 35 à 65 % |
| solution aqueuse acide | 20 à 45 % |
| agent tensioactif | 4 à 13 % |
| agent co-tensioactif | 4 à 13 % |

le rapport pondéral solution aqueuse acide/hydrocarbure étant de 0,5 à 1.

2. Composition comprenant un hydrocarbure halogéné ou non halogéné, en microémulsion avec une solution aqueuse d'un acide au moyen d'un agent tensioactif constitué par un ou plusieurs esters phosphoriques, accompagné d'un agent co-tensioactif, composition dans laquelle les relations suivantes existent entre les proportions pondérales des composants de la microémulsion :

| | |
|---|---|
| hydrocarbure | 30 à 47 % |
| solution aqueuse acide | 18 à 35 % |
| agent tensioactif | 13 à 28 % |
| agent co-tensioactif | 5 à 23 % |

le rapport pondéral solution aqueuse acide/hydrocarbure étant de 0,5 à 1.

3. Composition selon la revendication 1, dans laquelle la solution aqueuse acide renferme 20 à 85 % en poids de $PO_4H_3$.

4. Composition selon la revendication 2, dans laquelle la solution aqueuse acide renferme de l'acide chlorhydrique.

5. Composition selon une des revendications 1 à 4, dans laquelle l'agent tensioactif est constitué par un ou plusieurs mono- ou/et di-esters phosphoriques du répondant à la formule :

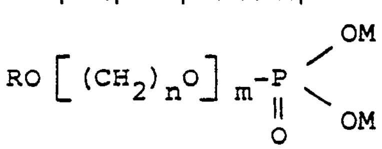

où R est un alkyle ou alkényle en $C_1$ à $C_{30}$, et de préference en $C_6$ à $C_{18}$, ou bien un phényle pouvant porter de substituants alkyliques, n est un nombre entier de 1 à 6 et de préférence de 2 à 4, tandis que m est un nombre entier de 2 à 15, et de préférence entre 3 et 10 ; les M désignent des cations, plus particulièrement H, Na, K, $NH_4$, alcalino-terreux ou Zn, ou bien un d'entre eux est formé par une chaîne RO $[(CH_2)_nO]_m$, R, n et m ayant les significations indiquées ci-dessus.

6. Composition selon une des revendications 1 à 4, dans laquelle l'agent tensioactif contient, ou est constitué par un triester phosphorique répondant à la formule :

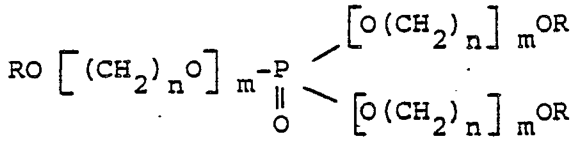

où R est un alkyle ou alkényle en $C_1$ à $C_{30}$, et de préférence en $C_6$ à $C_{18}$, ou bien un phényle pouvant porter de substituants alkyliques, n est un nombre entier de 1 à 6 et de préférence de 2 à 4, tandis que m est un nombre entier de 2 à 15, et de préfence entre 3 à 10.

7. Composition selon une des revendications 1 à 6, dans laquelle l'agent co-tensioactif est un alcool ou éther-alcool en $C_6$ à $C_{10}$.

8. Utilisation de la composition selon une des revendications 1, 3, 5 à 7, pour le dégraissage et la phosphatation de surfaces de métaux ferreux en une seule opération.

9. Utilisation de la composition selon une des revendications 2, 4 à 7, pour le dégraissage et le décapage simultanés.

**Claims**

1. Composition comprising a halogenated or nonhalogenated hydrocarbon, in a microemulsion with an aqueous solution of an acid by means of a surface-active agent comprising one or more phosphoric esters accompanied by a co-surfactant, in which the following ratios exist between the proportions by weight of the components of the microemulsion :

| | |
|---|---|
| hydrocarbon | 35-65 % |
| aqueous acid solution | 20-45 % |
| surface-active agent | 4-13 % |
| co-surfactant | 4-13 % |

the weight of the aqueous acid solution/hydrocarbon being from 0.5 to 1.

2. Composition comprising a halogenated or nonhalogenated hydrocarbon, in a microemulsion with an aqueous solution of an acid by means of a surface-active agent comprising one or more phosphoric esters accompanied by a co-surfactant, in which the following ratios exist between the proportions by weight of the components of the microemulsion :

| | |
|---|---|
| hydrocarbon | 30-47 % |
| aqueous acid solution | 18-35 % |
| surface-active agent | 13-28 % |
| co-surfactant | 5-23 % |

the weight ratio of the aqueous acid solution/hydrocarbon being from 0.5 to 1.

3. Composition according to claim 1, in which the aqueous acid solution comprises 20-85 % by weight of $H_3PO_4$.

4. Composition according to claim 2, in which the aqueous acid solution comprises hydrochloric acid.

5. Composition according to any of claims 1 to 4, in which the surface-active agent comprises one or more phosphoric mono- and/or di-esters corresponding to the formula :

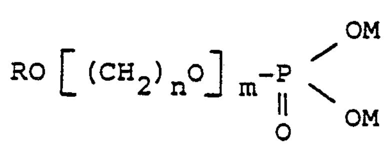

where R is a $C_1$ to $C_{30}$ alkyl or alkenyl, preferably $C_6$ to $C_{18}$, or a phenyl which can carry alkyl substituents, n is an integral number from 1 to 6 and preferably from 2 to 4, while m is an integral number from 2 to 15 and preferably from 3 to 10, M designates captions, more particularly H, Na, K, $NH_4$, alkaline

earths or Zn, or one of them is formed by a chain RO $[(CH_2)_nO]_m$, R, n and m having the meanings indicated above.

6. Composition according to any of claims 1 to 4, in which the surface-active agent contains or consists of a phosphoric triester corresponding to the formula

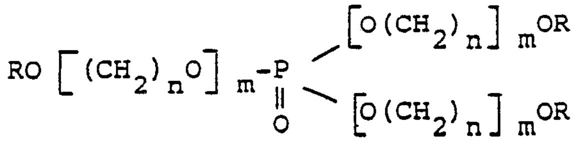

where R is a $C_1$ to $C_{30}$ alkyl or alkenyl, preferably $C_6$ to $C_{18}$, or a phenyl which can carry alkyl substituents, n is an integral number from 1 to 6 and preferably from 2 to 4, while m is an integral number from 2 to 15 and preferably from 3 to 10.

7. Composition according to any of claims 1 to 6, in which the co-surfactant is a $C_6$ to $C_{10}$ alcohol or ether-alcohol.

8. Use of the composition according to any of claims 1, 3 and 5 to 7 for the degreasing and phosphatation of ferrous metal surfaces in a single operation.

9. Use of the composition according to any of claims 2 and 4 to 7, for simultaneous degreasing and scouring.

**Patentansprüche**

1. Zusammensetzung, enthaltend einen halogenierten oder nichthalogenierten Kohlenwasserstoff, in Mikroemulsion mit einer wässerigen Lösung einer Säure mittels eines oberflächenaktiven Mittels, das aus einem oder mehreren Phosphorsäureestern zusammen mit einem co-oberflächenaktiven Mittel besteht, wobei in der Zusammensetzung folgende relativen Gewichtsverhältnisse der Bestandteile der Mikroemulsion vorliegen :

| | |
|---|---|
| Kohlenwasserstoff | 35 bis 65 % |
| saure wässrige Lösung | 20 bis 45 % |
| oberflächenaktives Mittel | 4 bis 13 % |
| co-oberflächenaktives Mittel | 4 bis 13 % |

wobei das Gewichtsverhältnis der wässrigen sauren Lösung/Kohlenwasserstoff 0,5 bis 1 beträgt.

2. Zusammensetzung, enthaltend einen halogenierten oder nichthalogenierten Kohlenwasserstoff, in Mikroemulsion mit einer wässerigen Lösung einer Säure mittels eines oberflächenaktiven Mittels, das aus einem oder mehreren Phosphorsäureestern zusammen mit einem co-oberflächenaktiven Mittel besteht, wobei in der Zusammensetzung folgende relativen Gewichtsverhältnisse der Bestandteile der Mikroemulsion vorliegen :

| | |
|---|---|
| Kohlenwasserstoff | 30 bis 47 % |
| saure wässrige Lösung | 18 bis 35 % |
| oberflächenaktives Mittel | 13 bis 28 % |
| co-oberflächenaktives Mittel | 5 bis 23 % |

wobei das Gewichtsverhältnis der wässrigen sauren Lösung/Kohlenwasserstoff 0,5 bis 1 beträgt.

3. Zusammensetzung nach Anspruch 1, worin die saure wässrige Lösung 20 bis 85 Gew.% $PO_4H_3$ enthält.

4. Zusammensetzung nach Anspruch 2, worin die saure wässrige Lösung Chlorwasserstoffsaüre enthält.

5. Zusammensetzung nach einem der Ansprüche 1 bis 4, worin das oberflächenaktive Mittel aus einem oder mehreren Phosphorsäure-mono-oder/und -diestern der Formel

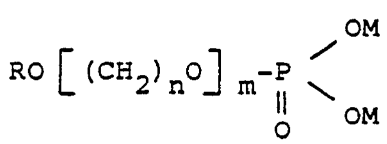

ausgewählt ist, worin R Alkyl oder Alkenyl mit $C_1$ bis $C_{30}$ und vorzugsweise mit $C_6$ bis $C_{18}$ oder Phenyl, das gegebenenfalls Alkylsubsituenten tragen kann, ist ; n eine ganze Zahl von 1 bis 6 und vorzugsweise 2 bis 4 ist, während m eine ganze Zahl von 2 bis 15 und vorzugsweise 3 bis 10 ist ; die Reste M Kationen insbesondere H, Na, K, $NH_4$, Erdalkali oder Zn, bedeuten oder worin zwischen ihnen eine Kette der Formel

RO $[(CH_2)_nO]_m$ gebildet ist und R, n und m die vorstehend angegebenen Bedeutungen haben.

6. Zusammensetzung nach einem der Ansprüche 1 bis 4, worin das oberflächenaktive Mittel einen Phosphorsäuretriester der folgenden Formel enthält oder aus diesem gebildet ist

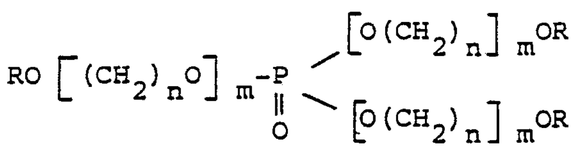

worin R Alkyl oder Alkenyl mit $C_1$ bis $C_{30}$ und vorzugsweise mit $C_6$ bis $C_{18}$, oder ein Phenyl, das Alkylsubstituenten tragen kann, ist, n eine ganze Zahl von 1 bis 6 und vorzugsweise 2 bis 4 ist, während m eine ganze Zahl von 2 bis 15 und vorzugsweise von 3 bis 10 ist.

7. Zusammensetzung nach einem der Ansprüche 1 bis 6, worin das co-oberflächenaktive Mittel ein Alkohol oder Etheralkohol mit $C_6$ bis $C_{10}$ ist.

8. Verwendung der Zusammensetzung nach einem der Ansprüche 1, 3, 5 bis 7 zur Entfettung und Phosphatierung von Eisenmetallen in einem einzigen Arbeitsgang.

9. Verwendung der Zusammensetzung nach einem der Ansprüche 2, 4 bis 7 zum gleichzeitigen Entfetten und Abbeizen.